# EUROPEAN PATENT SPECIFICATION

(11) **EP 4 656 896 B1**
(45) Date of publication and mention of the grant of the patent: **04.11.2026**
(21) Application number: 25178764.4
(22) Date of filing: 26.05.2025
(51) Int. Cl.: F16D 43/12

(54) **STRADDLED VEHICLE**
GRÄTSCHSITZFAHRZEUG
VÉHICULE À SELLE

(30) Priority: 28.05.2024 JP 2024086414
(43) Date of publication of application: 03.12.2025
(73) Proprietor: Yamaha Hatsudoki Kabushiki Kaisha, Iwata-shi, Shizuoka 438-8501 (JP)
(72) Inventor: HIROSE, Ryotaro, Iwata-shi, Shizuoka, 4388501 (JP); MIURA, Tetsu, Iwata-shi, Shizuoka, 4388501 (JP); HATORI, Takuto, Iwata-shi, Shizuoka, 4388501 (JP); MINAMI, Kengo, Iwata-shi, Shizuoka, 4388501 (JP); SEKIYA, Yu, Iwata-shi, Shizuoka, 4388501 (JP); TAKAHASHI, Seigo, Iwata-shi, Shizuoka, 4388501 (JP); SAKAUE, Masaya, Iwata-shi, Shizuoka, 4388501 (JP); KATO, Hayate, Iwata-shi, Shizuoka, 4388501 (JP); HAYASHIDA, Isamu, Iwata-shi, Shizuoka, 4388501 (JP); TAKATANI, Kenji, Iwata-shi, Shizuoka, 4388501 (JP)
(74) Representative: Stöckeler, Ferdinand

(56) References cited:
- JP-B2- 7 307 252
- US-A1- 2009 211 868
- US-B2- 8 210 334
- US-B2- 8 317 009
- US-B2- 8 381 891

## Description

### Technical Field

The present teaching relates to a centrifugal clutch and a straddled vehicle.

### Background Art

Patent Literature 1 (PTL 1) shows a centrifugal clutch included in a motorcycle, which is one of straddled vehicles. The clutch is a centrifugal clutch of a type that is disposed between a power source and a stepped transmission. The centrifugal clutch transitions from a power transmission disconnected state to a power transmission connected state in accordance with an increase of an input rotation speed. A straddled vehicle including a centrifugal clutch, therefore, can eliminate the need for a clutch manipulation at a time of starting.

Patent Literature 2 (PTL 2) shows a centrifugal multi-plate friction clutch that comprises a clutch shaft; a clutch boss attached to the clutch shaft; a clutch housing including a bottom portion in a closed-end cylindrical shape surrounding the clutch boss, a plurality of arms extending along an axial direction of the clutch shaft from the bottom portion and provided along a circumferential direction centering on the axial center of the clutch shaft, and a plurality of gaps each formed between the arms that are adjacent to each other along the circumferential direction, the clutch housing being configured to rotate in the circumferential direction; a plurality of first plates attached to the clutch boss and arranged along the axial direction; a plurality of second plates attached to the clutch housing and arranged along the axial direction alternately with the plurality of first plates; centrifugal weights configured to receive centrifugal force by rotating with the clutch housing and move in a direction away from the axial center of the clutch shaft; a cam mechanism for converting the centrifugal force into a force in the axial direction by contacting with the centrifugal weights; a pressure plate configured to move toward one side in the axial direction by receiving the force in the axial direction to make the first plates and the second plates come into contact with one another; a clutch release mechanism for moving the pressure plate toward the other side in the axial direction; a clutch operator for operating the clutch release mechanism; and a plurality of elastic bodies arranged in the gaps of the clutch housing for urging the pressure plate toward the other side in the axial direction; wherein each of the second plates has a plurality of claws extending radially outwardly, and each of the second plates is attached to the clutch housing by fitting the plurality of claws into respective ones of the plurality of gaps; and wherein support portions, each extending along the circumferential direction and supporting one end of the elastic body, are provided at proximal end portions of some of the plurality of arms.

### Citation List

### Patent Literature

PTL 1 : JP 2022-173517 A
PTL 2: US 8 317 009 B2

### Summary of Invention

### Technical Problem

A centrifugal clutch connected to a transmission is desired to be capable of reducing a gear-shift shock while suppressing a decrease in connection capacity in a connected state.

The present teaching aims to provide a centrifugal clutch and a straddled vehicle capable of reducing a gear-shift shock while suppressing a decrease in connection capacity in a connected state.

### Solution to Problem

Conceivably, a centrifugal clutch is driven by an electric actuator, or is combined with a so-called quick shift, for example. The electric actuator is for electrically driving a mechanism that disconnects the centrifugal clutch. The quick shift is a structure for temporarily changing an output of a power source when switching a gear stage, to facilitate disengagement and engagement of gears for switching in a transmission.

When a state of transmission of a driving force via the centrifugal clutch changes, there occurs a temporary change in rotation speed and driving force that are transmitted to a wheel. A rapid change is perceived as a shock. For example, when the centrifugal clutch transitions from a non-connected state to a connected state, there occurs a temporary change in rotation speed and driving force that are transmitted to the wheel. Parts that interlock with the wheel have inertia, and parts that interlock with a crankshaft of an engine have inertia, too. If they are connected though they have different speeds, a shock that is according to the speed difference and inertia occurs until the speed difference is eliminated.

The shock encompasses a start-time shock and a gear-shift shock. The start-time shock occurs when a stopped vehicle starts. The gear-shift shock occurs while a vehicle is traveling.

The centrifugal clutch of PTL 1 includes a plate that rotates together with an input member, which is rotated by a driving force of an engine, a plate that is disposed in an output section, which is able to rotate a wheel of a vehicle, and a weight member. In the centrifugal clutch, as the weight member moves outward along with rotation, the two types of plates are switched from an inactive state, in which they are free from a pressure-contact force, to an active state, in which they are in pressure-contact with each other. In this manner, the centrifugal clutch is brought into a connected state, in which the centrifugal clutch is able to transmit a driving force of the engine to the wheel via the transmission.

In the centrifugal clutch of PTL 1, at a time of a gear-shifting manipulation, if an operating member moves due to a manipulation on a clutch lever or due to an operation of an actuator, the pressure-contact force is removed to bring the clutch into an off state, which means a state where the connected state is removed ([0042] of PTL 1).

In the centrifugal clutch of PTL 1, to suppress the start-time shock, a clutch spring and a buffer member are used. The clutch spring is disposed between a pressure member and an interlocking member. The buffer member is disposed between the two types of clutch plates. Disposed between the pressure member and the operating member (bearing retainer member) is a release spring.

When the vehicle starts, as the number of rotations of the engine increases, the weight member moves outward, and due to an effect of the weight member and a cam, the interlocking member moves, in the course of which the release spring is firstly bent, and then the buffer member is bent. Simultaneously with a load on the release spring reaching its maximum, the clutch spring starts to be bent. This is how the centrifugal clutch of PTL 1 suppresses abruptness in power transmission by suppressing the start-time shock ([0068] to [0074] of PTL 1).

The gear-shift shock is likely to occur when the centrifugal clutch transitions to the connected state after the gear stage of the transmission is switched while the vehicle is traveling and the centrifugal clutch is in the non-connected state. The gear-shift shock is likely to occur at a time of switching the gear stage of the transmission without bringing the centrifugal clutch into the non-connected state, in switching of the gear stage using a quick shift, for example.

The weight member of the centrifugal clutch of PTL 1 is positioned outward under a situation where switching of the gear stage is performed while the vehicle is traveling. When the weight member is positioned outward, as mentioned above, the load on the release spring has already reached its maximum, and the release spring has deformed to a maximum bending amount. That is, the release spring is squashed. Thus, the release spring cannot deform any more. When, therefore, the operating member moves so as to remove the connected state of the centrifugal clutch before switching of the gear stage is started, the amount of movement of the operating member is directly reflected in the amount of movement of the pressure member via the bearing retainer member. More specifically, in the centrifugal clutch of PTL 1, as the operating member moves, the bearing retainer member interlocking therewith comes into contact with the pressure member, to move the pressure member from an operating position to a non-operating position ([0042] of PTL 1). Consequently, a load acting on the two types of plates rapidly decreases, to bring the clutch into the disconnected state.

Then, if the gear stage is switched in the transmission, one of the two types of plates rotates while reflecting the gear ratio of the switched gear stage, which causes a speed difference between the two types of plates.

When the operating member moves so as to bring the centrifugal clutch into the connected state after completion of switching of the gear stage, too, the movement of the operating member is directly reflected in the movement of the pressure member via the bearing retainer member and the interlocking member. Consequently, a load acting on the two types of plates rapidly increases, to switch the clutch from the disconnected state to the connected state. At this time, the two types of clutch plates are brought into the connected state, and the gear-shift shock occurs.

The direction of an elastic force of the release spring of PTL 1 is such a direction that a pressing force of the clutch spring is always reduced in traveling. Thus, if a spring having such a high maximum load, or such a high modulus of elasticity, that the spring does not deform even in starting or traveling of a vehicle was adopted as the release spring of PTL 1, a load acting on the two types of plates in the connected state is lowered. That is, the connection capacity of the centrifugal clutch in the connected state, which is a basic performance of the centrifugal clutch, decreases. In other words, a driving force of traveling that the centrifugal clutch is able to transmit is deteriorated.

The inventors of the present teaching, after significant research for achieving both suppression of a decrease in connection capacity of the centrifugal clutch and reduction of the gear-shift shock at a time of switching the gear stage, have conceived of a configuration that creates a half-clutch state of the centrifugal clutch. In more detail, the inventors of the present teaching have conceived of a configuration in which: a manipulation force transmission member for receiving a manipulation force on an operating member from the outside is provided with a preload member; and a half-clutch manipulation force buffer spring and a pressing portion, which displaces along with outward movement of a weight member, are pinched between the manipulation force transmission member and the preload member. In this configuration, the half-clutch manipulation force buffer spring is disposed between the manipulation force transmission member and the preload member while being in a preload state in which the half-clutch manipulation force buffer spring is elastically deformed by a preload though no manipulation force is received.

While the vehicle is traveling, the centrifugal clutch is in the connected state, and the manipulation force transmission member is at an initial position, which corresponds to the preload state; the preload state of the half-clutch manipulation force buffer spring is maintained. That is, a compression reaction force of the half-clutch manipulation force buffer spring does not resist a biasing force of the clutch spring. Thus, the two types of plates are pressed to each other by the biasing force of the clutch spring. Accordingly, the connection capacity of the centrifugal clutch in traveling does not decrease even though the half-clutch manipulation force buffer spring is provided.

As the operating member moves from the initial position further in a releasing direction in accordance with a manipulation, and the manipulation force transmission member displaces in the releasing direction accordingly; the half-clutch manipulation force buffer spring elastically deforms from the preload state. The half-clutch manipulation force buffer spring deforms while absorbing an amount of displacement of the manipulation force transmission member, and in this state, biases the pressing portion in the releasing direction with an elastic force according to the deformation. The biasing force of the half-clutch manipulation force buffer spring resists the pressing force that the clutch spring applies to the two types of plates. As the biasing force of the half-clutch manipulation force buffer spring increases, the pressing force to the two types of plates therefore decreases. This consequently brings the centrifugal clutch into the half-clutch state.

Immediately after the gear stage is switched, a speed difference occurs between the two types of plates. In the centrifugal clutch, however, the two types of plates in the half-clutch state rub against each other with a friction force in the half-clutch state, and in this state, the speed difference therebetween is gradually reduced. Unlike in the connected state, the two types of plates are capable of rotating relative to each other, but they rub against each other with the friction force in the half-clutch state, and therefore the speed difference is gradually reduced. Since the speed difference is gradually reduced in the half-clutch state, the gear-shift shock is suppressed.

When, after the gear stage is switched and then the speed difference is reduced, the manipulation force transmission member displaces in a pressing direction, which is reverse to the releasing direction; the compression reaction force of the half-clutch manipulation force buffer spring, which resists the biasing force of the clutch spring, decreases in accordance with recovery from deformation of the half-clutch manipulation force buffer spring. As a result, the pressing force to the two types of plates increases. Thus, the connection capacity of the centrifugal clutch increases from its capacity in the half-clutch state. At this time, the speed difference has been eliminated or reduced, and therefore the gear-shift shock is suppressed.

Accordingly, it is possible to achieve both suppression of a decrease in connection capacity at a time of connecting the centrifugal clutch and reduction of the gear-shift shock at a time of switching the gear stage.

Based on the knowledge described above, the inventors of the present teaching have accomplished the present teaching. To be specific, the present teaching can adopt the following configurations.
(1) A centrifugal clutch for transmitting a rotational driving force of a power source to a stepped transmission, the centrifugal clutch including:
   a clutch housing configured to be rotated about a rotation axis line by receiving a rotational driving force of the power source;
   a first friction plate configured to rotate integrally with the clutch housing;
   a second friction plate configured to rotate integrally with an output section of the centrifugal clutch;
   a clutch spring for producing, as a reaction force of elastic deformation, a pressing force in a pressing direction parallel to the rotation axis line, the pressing force pressing one friction plate out of the first friction plate and the second friction plate to the other friction plate out of the first friction plate and the second friction plate, to bring the first friction plate and the second friction plate into an engaged state;
   a pressing portion disposed between the clutch spring and the first and second friction plates, the pressing portion being configured to receive the pressing force from the clutch spring;
   a weight member arranged so as to rotate together with rotation of the clutch housing, the weight member being configured to displace outward in a rotational radial direction due to a centrifugal force of rotation;
   a cam portion disposed in contact with the weight member, the cam portion being disposed between the clutch housing and the pressing portion in an axial direction of the rotation axis line, the cam portion being configured to press the first friction plate and the second friction plate with the pressing force received by the pressing portion as the weight member displaces outward;
   a manipulation force transmission member configured to receive a manipulation force for changing the state of the first friction plate and the second friction plate from the engaged state to a half-clutch state, and displace in a releasing direction reverse to the pressing direction, to apply a half-clutch manipulation force to the pressing portion, the half-clutch manipulation force resisting the pressing force from the clutch spring;
   a half-clutch manipulation force buffer spring interposed between the manipulation force transmission member and the pressing portion, the half-clutch manipulation force buffer spring being configured to be pushed by the manipulation force transmission member moving in the releasing direction, and elastically deform, to bias the pressing portion in the releasing direction; and
   a preload member that is fixed to the manipulation force transmission member so as to create a state in which the half-clutch manipulation force buffer spring and the pressing portion are pinched between the preload member and the manipulation force transmission member while a preload is applied to the half-clutch manipulation force buffer spring.

In the centrifugal clutch of (1), the clutch spring produces the pressing force. The pressing force is a force that presses one friction plate out of the first friction plate and the second friction plate to the other friction plate out of the first friction plate and the second friction plate. The clutch spring produces the pressing force in the pressing direction. The pressing direction is a direction parallel to the rotation axis line, and is a direction from the clutch spring toward the first friction plate. The pressing portion receives the pressing force from the clutch spring. Here, whether or not the clutch spring produces the pressing force as a reaction force of elastic deformation is determined by the position of the weight member.

The cam portion is disposed in contact with the weight member. The cam portion has such a shape that as the weight member displaces outward while rotating, the cam portion presses the first friction plate and the second friction plate with the pressing force received by the pressing portion. Thus, as the weight member displaces outward, the first friction plate and the second friction plate are pressed with the pressing force received by the pressing portion. This brings the first friction plate and the second friction plate into the engaged state. Consequently, the centrifugal clutch is brought into the connected state.

The cam portion has such a shape that if the weight member does not rotate and does not displace outward, elastic deformation of the clutch spring for producing the pressing force is not allowed. If, therefore, the weight member does not rotate, the centrifugal clutch is in the disconnected state.

The half-clutch manipulation force buffer spring is, while having the preload applied thereto, sandwiched between the manipulation force transmission member and the pressing portion. Thus, the half-clutch manipulation force buffer spring maintains the state of having the preload applied thereto for a period in which the weight member displaces outward.

In the connected state in which the manipulation force transmission member is at the initial position, which corresponds to the preload state, the half-clutch manipulation force buffer spring maintains the preload state. In other words, a compression reaction force of the half-clutch manipulation force buffer spring does not resist the pressing force of the clutch spring. The first friction plate and the second friction plate are therefore pressed with the pressing force of the clutch spring. Accordingly, the connection capacity of the centrifugal clutch in traveling does not decrease even though the half-clutch manipulation force buffer spring is provided.

If switching of the gear stage in the transmission is started while the centrifugal clutch is in the connected state for example, the centrifugal clutch is brought into the half-clutch state. To be specific, the manipulation force transmission member displaces in the releasing direction in accordance with a manipulation, along with which the manipulation force transmission member biases the pressing portion in the releasing direction via the half-clutch manipulation force buffer spring. Here, the preload is applied to the half-clutch manipulation force buffer spring. Therefore, if the manipulation force transmission member is at or before the initial position, which corresponds to the preload, that is, if a manipulation force acting on the manipulation force transmission member is smaller than the preload, the half-clutch manipulation force buffer spring maintains the preload state. That is, the half-clutch manipulation force buffer spring does not deform from the preload state.

As the manipulation force transmission member further displaces in the releasing direction from the initial position, the half-clutch manipulation force buffer spring elastically deforms from the preload state. The half-clutch manipulation force buffer spring deforms while absorbing an amount of displacement of the manipulation force transmission member, and in this state, biases the pressing portion in the releasing direction with an elastic force according to the deformation. The biasing force of the half-clutch manipulation force buffer spring resists the pressing force that the clutch spring applies to the first friction plate and the second friction plate. As the biasing force of the half-clutch manipulation force buffer spring increases, the pressing force to the first friction plate and the second friction plate therefore decreases. This consequently brings the centrifugal clutch into the half-clutch state.

After the gear stage is switched, the manipulation force transmission member displaces so as to return in the pressing direction, which is reverse to the releasing direction. While the half-clutch manipulation force buffer spring is recovering from the deformed state to the preload state, its biasing force biasing the pressing portion in the releasing direction decreases. As a result, the pressing force to the first friction plate and the second friction plate is restored. Consequently, the centrifugal clutch shifts from the half-clutch state to the connected state.

Immediately after the gear stage is switched, a speed difference occurs between the first friction plate and the second friction plate. In the centrifugal clutch of (1), the first friction plate and the second friction plate in the half-clutch state rub against each other with a friction force in the half-clutch state, and in this state, the speed difference therebetween is gradually reduced. Unlike in the connected state, the first friction plate and the second friction plate in the half-clutch state are capable of rotating relative to each other, but they rub against each other with the friction force in the half-clutch state, and therefore the speed difference is gradually reduced.

When, after the gear stage is switched and then the speed difference is reduced, the manipulation force transmission member displaces in the pressing direction; a compression reaction force of the half-clutch manipulation force buffer spring, which resists the pressing force of the clutch spring, decreases in accordance with recovery from deformation of the half-clutch manipulation force buffer spring. As a result, the pressing force to the first friction plate and the second friction plate increases. Thus, the connection capacity of the centrifugal clutch increases from the capacity in the half-clutch state. At this time, the speed difference has been eliminated, and therefore the gear-shift shock is suppressed.

Accordingly, the centrifugal clutch of (1) is capable of both suppressing a decrease in connection capacity of the centrifugal clutch in the connected state and reducing the gear-shift shock at a time of switching the gear stage.

(2) In the centrifugal clutch of (1),
the half-clutch manipulation force buffer spring is a non-linear spring.

The thicknesses of the first friction plate and the second friction plate change over time due to wear, for example. Thus, the amount of displacement of the pressing portion required to obtain a target load corresponding to the half-clutch state also changes over time. In the centrifugal clutch of (2), the half-clutch manipulation force buffer spring is a non-linear spring. That is, as the deformation progresses, a change in the reaction force of the half-clutch manipulation force buffer spring relative to the amount of deformation decreases. Therefore, when the manipulation force transmission member makes the half-clutch manipulation force buffer spring deform from the preload state while the manipulation force transmission member receiving a manipulation force is displacing in the releasing direction, a fluctuation in the reaction force of the half-clutch manipulation force buffer spring can be suppressed relative to the amount of fluctuation of the pressing portion due to an over-time change. Thus, the centrifugal clutch of (2) can suppress an over-time change in the degree of reduction of the gear-shift shock at a time of switching the gear stage. Accordingly, both suppression of a decrease in connection capacity of the centrifugal clutch and reduction of the gear-shift shock at a time of switching the gear stage can be achieved over a long period and with a high accuracy.

(3) In the centrifugal clutch of (1) or (2),
the preload member is fixed to the manipulation force transmission member, at such a position that the amount of deformation of the half-clutch manipulation force buffer spring having a preload applied thereto is maintained irrespective of displacement of the weight member.

In the centrifugal clutch of (3), the amount of deformation of the half-clutch manipulation force buffer spring is maintained irrespective of displacement of the weight member. This can suppress a fluctuation in the amount of displacement of the manipulation force transmission member, the fluctuation being attributable to the rotation speed of the clutch housing.

(4) In the centrifugal clutch of any one of (1) to (3),
one of the manipulation force transmission member and the preload member has a penetrating portion, and the other of the manipulation force transmission member and the preload member is fixed to the penetrating portion, the penetrating portion penetrating the half-clutch manipulation force buffer spring and the pressing portion and protruding from the half-clutch manipulation force buffer spring and the pressing portion.

In the centrifugal clutch of (4), the reaction force of the half-clutch manipulation force buffer spring is suppressed by the penetrating portion, which penetrates the half-clutch manipulation force buffer spring and the pressing portion. The reaction force of the half-clutch manipulation force buffer spring is therefore likely to be suppressed uniformly on a circumference centered on the penetrating portion. Accordingly, non-uniform deformation of the half-clutch manipulation force buffer spring is suppressed. This can consequently suppress a fluctuation in the amount of reduction of the gear-shift shock at a time of switching the gear stage.

(5) A straddled vehicle including:
the centrifugal clutch of any one of (1) to (4); and
a wheel configured to receive a rotational driving force transmitted via the centrifugal clutch.

The straddled vehicle of (5) is capable of both suppressing a decrease in connection capacity of the centrifugal clutch and reducing the gear-shift shock at a time of switching the gear stage.

(6) The straddled vehicle of (5) further includes
an electric clutch drive mechanism having an actuator, the electric clutch drive mechanism being configured to, through an operation of the actuator, displace the manipulation force transmission member in the releasing direction.

In the straddled vehicle of (6), the manipulation force transmission member is displaced through the operation of the actuator. Thus, a fluctuation in the amount of reduction of the gear-shift shock is suppressed with a high accuracy. A fluctuation in the degree of reduction of the gear-shift shock in the centrifugal clutch is further suppressed.

The power source is an engine that produces a rotational driving force through combustion of a fuel, for example. The power source is not particularly limited, and may be an electric motor, for example.

The half-clutch manipulation force buffer spring is a disc spring, for example. The half-clutch manipulation force buffer spring is not particularly limited, and may be a non-linear spring such as an unequal-pitch coiled spring, for example. The half-clutch manipulation force buffer spring is not especially limited to the non-linear spring, and may be a linear spring.

The manipulation force transmission member of the centrifugal clutch is manipulated and moved by the electric clutch drive mechanism having the actuator, for example. The manipulation force transmission member of the centrifugal clutch is not particularly limited, and may be configured to be driven and moved by a rider's manipulation, for example. In other words, a manipulation on the manipulation force transmission member may be performed not by the actuator but by the rider.

The manipulation force transmission member, for example, has the penetrating portion that penetrates the half-clutch manipulation force buffer spring and the pressing portion, and protrudes from the half-clutch manipulation force buffer spring and the pressing portion, and the preload member is fixed to the penetrating portion. The shapes and fixing structure of the manipulation force transmission member and the preload member are not particularly limited. It may be acceptable that the preload member has a penetrating portion, and the manipulation force transmission member is fixed to this penetrating portion, for example.

The straddled vehicle includes a control device for controlling the centrifugal clutch, a stepped transmission, and a drive source. The control device is not particularly limited, and may be composed of plural devices each dedicated to control each part, for example. The control device is a computer including a central processing unit (CPU) for executing a program, and a storage device for storing the program and data, for example. The control device is not limited to this, and may be a logic circuit not using a program, for example.

The electric clutch drive mechanism displaces the manipulation force transmission member of the centrifugal clutch, and switches the gear stage of the stepped transmission, for example. The electric clutch drive mechanism is not particularly limited, and may be a mechanism that operates only the centrifugal clutch without switching the gear stage of the stepped transmission, for example.

The straddled vehicle is a vehicle having a saddle-type seat. The straddled vehicle is a vehicle configured to have a rider ride thereon astride the seat. The straddled vehicle has a power source. The straddled vehicle is not limited to a motorcycle of a scooter type, a moped type, an off-road type, or an on-road type, but includes a snowmobile, a watercraft, an all-terrain vehicle (ATV), and the like. The straddled vehicle may include at least one front wheel and at least one rear wheel. The straddled vehicle is not limited to a motorcycle, and may be a motor tricycle whose front wheel or rear wheel is composed of a pair of left and right wheels, or a four-wheeled motor vehicle whose front wheel and rear wheel are each composed of a pair of left and right wheels. The straddled vehicle may be configured to be capable of turning with a leaning posture in which the straddled vehicle leans toward the center of a curve.

The terminology as used herein is for defining particular embodiments only and is not intended to be limiting the teaching. As stated herein, the term "and/or" includes any and all combinations of one or more of the associated listed items. As stated herein, the terms "including," "comprising," or "having," and variations thereof specify the presence of stated features, steps, operations, elements, components, and/or equivalents thereof, and can include one or more of steps, operations, elements, components, and/or their groups. As stated herein, the terms "attached," "connected," "engaged," and/or equivalents thereof are used in a broad sense, and include both direct and indirect attachment, connection, and engagement. Furthermore, the wordings "connected" and "engaged" are not limited to physical or mechanical connection or engagement, but may include direct or indirect electrical connection or engagement. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses multiple techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and claims.

This Description is giving an explanation about a novel centrifugal clutch and a novel straddled vehicle. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

### Advantageous Effects of Invention

The present teaching can provide a centrifugal clutch and a straddled vehicle capable of reducing a gear-shift shock while suppressing a decrease in connection capacity in a connected state.

### Brief Description of Drawings

[FIG. 1] Cross-sectional views schematically showing a centrifugal clutch according to a first embodiment of the present teaching
[FIG. 2] A graph showing an example of the relationship of a load of each part and the position of a manipulation force transmission member in the centrifugal clutch shown in FIG. 1
[FIG. 3] Cross-sectional views showing a centrifugal clutch according to a second embodiment of the present teaching
[FIG. 4] A side view showing a straddled vehicle as a third embodiment of the present teaching, the straddled vehicle including the centrifugal clutch shown in FIG. 3
[FIG. 5] A cross-sectional view showing a power unit shown in FIG. 4
[FIG. 6] A cross-sectional view schematically showing a first variation of the centrifugal clutch shown in FIG. 1
[FIG. 7] A cross-sectional view schematically showing a second variation of the centrifugal clutch shown in FIG. 1
[FIG. 8] A cross-sectional view showing a part of a variation example of the power unit shown in FIG. 5.

### Description of Embodiments

### [First Embodiment]

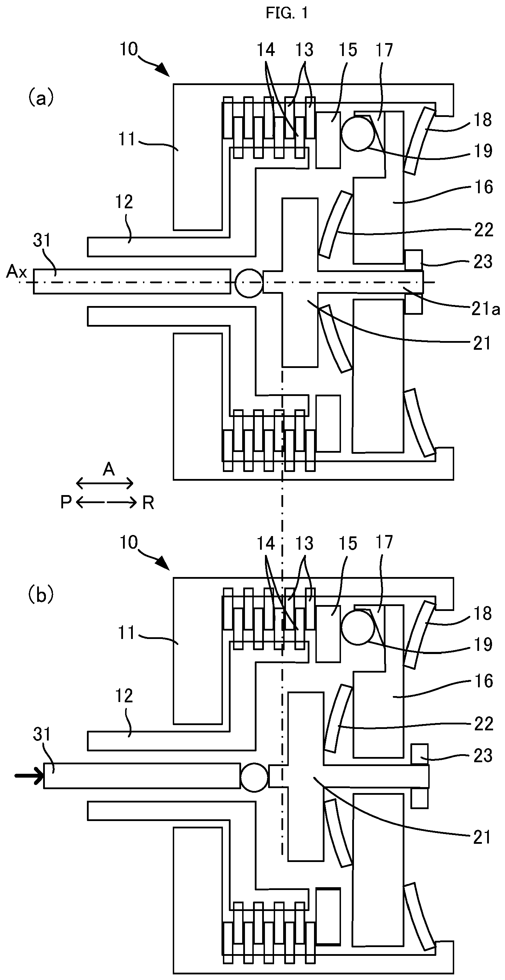

FIG. 1 is cross-sectional views schematically showing a centrifugal clutch according to the first embodiment of the present teaching. Illustrated in FIG. 1 is a cross-section of the centrifugal clutch including its rotation axis line Ax. In FIG. 1, hatching is omitted for clarity of an operation of each part. Both of the parts (a) and (b) of FIG. 1 show a traveling state. The part (a) of FIG. 1 shows a connected state of the centrifugal clutch, and the part (b) of FIG. 1 shows a half-clutch state of the centrifugal clutch.

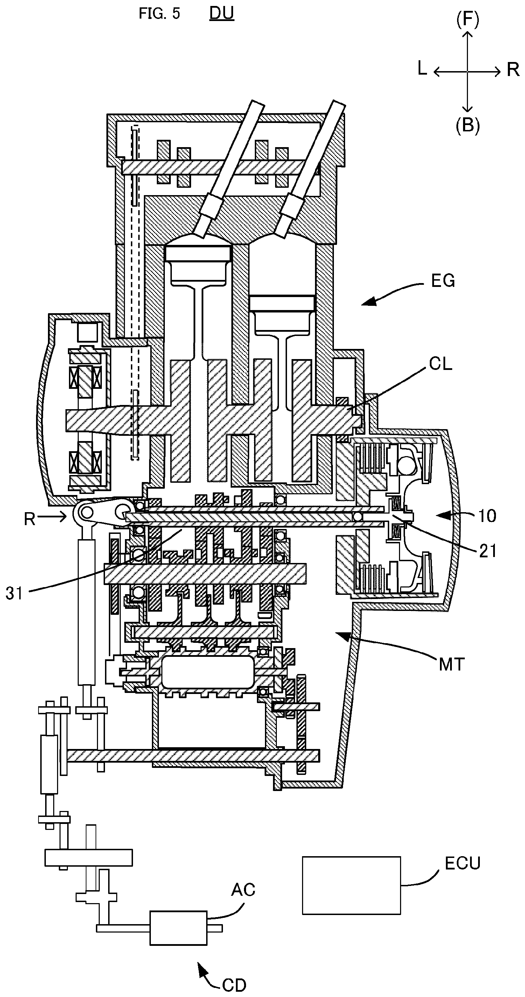

A centrifugal clutch 10 shown in FIG. 1 is included in a straddled vehicle 1 (see FIG. 5). The centrifugal clutch 10 transmits a rotational driving force of a power source EG of the straddled vehicle 1 to a stepped transmission MT. More specifically, the centrifugal clutch 10 has a connected state, a disconnected state, and a half-clutch state. The connected state is a state in which the rotational driving force of the power source EG is transmitted to the stepped transmission MT. The disconnected state is a state in which transmission of the rotational driving force is disconnected. The half-clutch state is a state in which the rotational driving force of the power source EG is partially transmitted. Although the rotational driving force is partially transmitted in the disconnected state, too, an amount of rotational driving force transmitted in the disconnected state is to such an extent traveling of the straddled vehicle 1 is not influenced.

The state of the centrifugal clutch 10 is switched from one to another of the connected state, the disconnected state, and the half-clutch state.

The centrifugal clutch 10 is a multi-disc clutch. The centrifugal clutch 10 includes a clutch housing 11, an output section 12, plural first friction plates 13, plural second friction plates 14, a pressure member 15, a pressing portion 16, a cam portion 17, a clutch spring 18, a weight member 19, a manipulation force transmission member 21, a half-clutch manipulation force buffer spring 22, and a preload member 23.

The clutch housing 11 is an input section of the centrifugal clutch 10 for input of a rotational driving force. The clutch housing 11 is rotated by receiving a rotational driving force of the power source EG. The clutch housing 11, more specifically, is connected to an output shaft CL (see FIG. 5) of the power source EG via a gear. The clutch housing 11 is rotated by receiving a rotational driving force that is transmitted from the output shaft CL of the power source EG via the gear. The clutch housing 11 accommodates the first friction plates 13, the second friction plates 14, the pressure member 15, the pressing portion 16, the cam portion 17, the clutch spring 18, and the weight member 19. The clutch housing 11 accommodates a part of the output section 12. The clutch housing 11 accommodates the manipulation force transmission member 21, the half-clutch manipulation force buffer spring 22, and the preload member 23.

The output section 12 is arranged so as to be rotatable relative to the clutch housing 11. The clutch housing 11 and the output section 12 are configured to rotate about the same rotation axis line Ax. Each part of the centrifugal clutch 10 rotates about the rotation axis line Ax. The rotation axis line Ax extends in axial direction A. The output section 12 outputs a rotational driving force from the centrifugal clutch 10. The output section 12 outputs the rotational driving force to the stepped transmission MT (see FIG. 5). The output section 12 is a clutch boss, for example.

The first friction plates 13 are configured to rotate integrally with the clutch housing 11. The first friction plates 13 function as a driving plate.

The second friction plates 14 are configured to rotate integrally with the output section 12. The second friction plates 14 function as a driven plate.

The first friction plates 13 and the second friction plates 14 are each an annular plate. The first friction plates 13 and the second friction plates 14 are arranged side by side so as to alternate each other in the axial direction A.

The clutch spring 18 produces, as a reaction force of elastic deformation, a pressing force that presses one type out of the first friction plates 13 and the second friction plates 14 to the other type out of the first friction plates 13 and the second friction plates 14. The clutch spring 18 produces the pressing force in pressing direction P. The pressing direction P is a direction parallel to the rotation axis line Ax, and is a direction from the clutch spring 18 toward the first friction plates 13. As the first friction plates 13 and the second friction plates 14 are pressed by the pressing force, the first friction plates 13 and the second friction plates 14 come into an engaged state.

The clutch spring 18 is attached to the clutch housing 11. The clutch spring 18 is arranged so as to rotate integrally with the clutch housing 11. The clutch spring 18 is a disc spring, for example.

The pressing portion 16 is disposed between the clutch spring 18 and the first and second friction plates 13, 14. The pressing portion 16 receives the pressing force from the clutch spring 18. The pressing portion 16 is arranged so as to be movable relative to the clutch housing 11 in the axial direction A while rotating integrally with the clutch housing 11.

The weight member 19 is arranged so as to rotate together with rotation of the clutch housing 11. The weight member 19, due to a centrifugal force of rotation, displaces outward in the rotational radial direction. In more detail, the weight member 19 of this embodiment is disposed between the pressing portion 16 and the pressure member 15 in the direction of the rotation axis line Ax. The pressing portion 16, the cam portion 17, and the weight member 19 of this embodiment are interposed between the clutch spring 18 and the pressure member 15.

The cam portion 17 is disposed in contact with the weight member 19. To be more specific, the cam portion 17 of this embodiment is provided integrally with the pressing portion 16.

The cam portion 17 has such a shape that as the weight member 19 displaces outward while rotating, the cam portion 17 presses the first friction plates 13 and the second friction plates 14 with a pressing force received by the pressing portion 16. In more detail, the cam portion 17 of this embodiment has a wedge-shaped cross-section whose dimension in the axial direction A is larger in its portion more outward of the radius of rotation. The first friction plates 13, the second friction plates 14, the pressing portion 16, the cam portion 17, the clutch spring 18, and the weight member 19 are arranged so as to at least partially overlap in the axial direction A in the clutch housing 11.

As the weight member 19 displaces outward, the pressing force that the pressing portion 16 has received from the clutch spring 18 is applied to the first friction plates 13 and the second friction plates 14. This brings the first friction plates 13 and the second friction plates 14 into the engaged state. Consequently, the centrifugal clutch 10 is brought into the connected state. More specifically, as the weight member 19 displaces outward, the pressing force produced by the clutch spring 18 and received by the pressing portion 16 is applied to the first friction plates 13 and the second friction plates 14 via the cam portion 17, the weight member 19, and the pressure member 15. That is, the weight member 19, by displacing outward, allows the pressing force produced by the clutch spring 18 to be transmitted from the pressing portion 16 and the cam portion 17 to the pressure member 15, the first friction plates 13, and the second friction plates 14. In this manner, the centrifugal clutch 10 is brought into the connected state.

The cam portion 17, on the other hand, has such a shape that elastic deformation of the clutch spring 18 for producing a pressing force is not allowed unless the weight member 19 rotates and displaces outward. If the weight member 19 does not rotate, therefore, the engaged state of the first friction plates 13 and the second friction plates 14 is removed. As a result, the centrifugal clutch 10 is in the disconnected state.

In other words, the pressure member 15, which has received a pressing force, presses one type of friction plates out of the first friction plates 13 and the second friction plates 14 to the other type of friction plates out of the first friction plates 13 and the second friction plates 14 in the pressing direction P parallel to the rotation axis line Ax. As a result, the first friction plates 13 and the second friction plates 14 are in contact with each other so as to press against each other. Due to friction between the first friction plates 13 and the second friction plates 14, a rotational driving force of the first friction plates 13 is transmitted to the second friction plates 14. That is, the first friction plates 13 and the second friction plates 14 are engaged with each other.

The pressing portion 16 is arranged so as to be movable relative to the pressure member 15 on the rotation axis line Ax.

The manipulation force transmission member 21 is pushed by an operating member 31, to displace in releasing direction R, which is reverse to the pressing direction P. The centrifugal clutch 10 of the embodiment is of an inner-push type. The operating member 31 is, for example, a push rod that is driven by an actuator. The displacement in the releasing direction R is a displacement for changing the state of the first friction plates 13 and the second friction plates 14 from the engaged state to the half-clutch state. Consequently, the manipulation force transmission member 21 applies a half-clutch manipulation force to the pressing portion 16. The half-clutch manipulation force is a force that resists the pressing force of the clutch spring 18.

The half-clutch manipulation force buffer spring 22, which is interposed between the manipulation force transmission member 21 and the pressing portion 16, is pushed by the manipulation force transmission member 21 moving in the releasing direction R, to elastically deform. In this manner, the half-clutch manipulation force buffer spring 22 biases the pressing portion 16 in the releasing direction R. The half-clutch manipulation force buffer spring 22 is a non-linear spring. The half-clutch manipulation force buffer spring 22 is more specifically a disc spring.

The preload member 23 is fixed to the manipulation force transmission member 21. The preload member 23 creates a state in which the half-clutch manipulation force buffer spring 22 and the pressing portion 16 are pinched between the preload member 23 and the manipulation force transmission member 21 while a preload is applied to the half-clutch manipulation force buffer spring 22. Thus, the half-clutch manipulation force buffer spring 22 is interposed between the manipulation force transmission member 21 and the pressing portion 16 while being elastically deformed to a certain degree by the preload even when the half-clutch manipulation force buffer spring 22 is not pushed by the operating member 31. The position of the manipulation force transmission member 21 at this time will be referred to as initial position.

The preload member 23 is fixed to the manipulation force transmission member 21, at such a position that the amount of deformation of the half-clutch manipulation force buffer spring 22 having the preload applied thereto is maintained irrespective of displacement of the weight member 19.

In more detail, the manipulation force transmission member 21 has a penetrating portion 21a, which penetrates the half-clutch manipulation force buffer spring 22 and the pressing portion 16, and protrudes from the half-clutch manipulation force buffer spring 22 and the pressing portion 16. The preload member 23 is fixed to the penetrating portion 21a. The preload member 23 is a nut-shaped member capable of screw-fitting with the penetrating portion 21a having a screw thread, for example. The preload member 23 creates a state in which the half-clutch manipulation force buffer spring 22 and the pressing portion 16 are pinched between the preload member 23 and the manipulation force transmission member 21 while the preload is applied to the half-clutch manipulation force buffer spring 22. A reaction force of the half-clutch manipulation force buffer spring 22 occurring in the surroundings of the penetrating portion 21a is likely to be suppressed uniformly on a circumference centered on the penetrating portion 21a when viewed in the direction of the rotation axis line Ax, for example. Accordingly, non-uniform deformation of the half-clutch manipulation force buffer spring 22 is suppressed. This can consequently suppress a fluctuation in the amount of reduction of a gear-shift shock, which may otherwise be caused by non-uniform deformation.

More specifically, the penetrating portion 21a is arranged on the rotation axis line Ax. The reaction force of the half-clutch manipulation force buffer spring 22 shaped like an annular ring arranged centered on the rotation axis line Ax is likely to be suppressed uniformly on a circumference centered on the rotation axis line Ax when viewed in the direction of the rotation axis line Ax, for example. Accordingly, the non-uniform deformation is further suppressed. This can consequently suppress a fluctuation in the amount of reduction of the gear-shift shock.

The half-clutch manipulation force buffer spring 22, to which the preload is applied, further deforms if pushed by the operating member 31 with a force exceeding the preload. At this time, the manipulation force transmission member 21 displaces in the releasing direction R from the initial position.

When the power source EG is in a stopped state or in an idling operation state, the clutch housing 11 and the weight member 19 are stopped, or are rotating at a rotation speed that corresponds to idling. In this case, the centrifugal clutch 10 is in the disconnected state. That is, the weight member 19 is located at a position closer to the rotation axis line Ax than the position shown in the part (a) of FIG. 1. Thus, the pressing force in the pressing direction P traveling from the clutch spring 18 to the pressing portion 16 is not transmitted to the pressure member 15. As a result, the first friction plates 13 and the second friction plates 14 are not pressed to each other. Accordingly, the rotational driving force of the first friction plates 13 is not transmitted to the second friction plates 14.

If the clutch housing 11 receiving the rotational driving force of the power source EG rotates at a rotation speed exceeding a speed that corresponds to idling, a centrifugal force of the rotation causes the weight member 19 to displace along a cam surface of the pressing portion 16, outward in the rotational radial direction, that is, in a direction away from the rotation axis line Ax. The weight member 19 eventually displaces up to the position shown in the part (a) of FIG. 1.

The clutch spring 18 biases the pressing portion 16 in the pressing direction P. The weight member 19, by displacing outward, allows a biasing force in the pressing direction P, which is received from the clutch spring 18 via the pressing portion 16, to be transmitted to the pressure member 15. The pressure member 15 presses the first friction plates 13 and the second friction plates 14, to engage the first friction plates 13 and the second friction plates 14 with each other. As a result, the centrifugal clutch 10 is brought into the connected state.

The half-clutch manipulation force buffer spring 22 is, while having the preload applied thereto by the preload member 23, sandwiched between the manipulation force transmission member 21 and the pressing portion 16. Thus, the half-clutch manipulation force buffer spring 22, unless receiving a manipulation force from the operating member 31, maintains the state of having the preload applied thereto, even for a period in which the weight member 19 displaces outward. That is, the half-clutch manipulation force buffer spring 22 does not deform from the preload state for a period in which the centrifugal clutch 10 switches from the disconnected state to the connected state as rotation increases. The manipulation force transmission member 21 maintains the initial position for the period in which the centrifugal clutch 10 switches from the disconnected state to the connected state as rotation increases.

When the centrifugal clutch 10 is in the connected state for example, the centrifugal clutch 10 is brought into the half-clutch state in accordance with a manipulation almost simultaneously with a start of switching of the gear stage in the stepped transmission MT. To be specific, as shown in the part (b) of FIG. 1, as the operating member 31 moves, the manipulation force transmission member 21 displaces in the releasing direction R from the initial position, along with which the manipulation force transmission member 21 biases the pressing portion 16 in the releasing direction R via the half-clutch manipulation force buffer spring 22.

Here, the preload is applied to the half-clutch manipulation force buffer spring 22. Therefore, if the manipulation force transmission member 21 is at the initial position, which corresponds to the preload, that is, if a manipulation force acting on the manipulation force transmission member 21 is smaller than the preload, the half-clutch manipulation force buffer spring 22 maintains the preload state. Thus, the half-clutch manipulation force buffer spring 22 does not deform from the preload state.

If the manipulation force acting on the manipulation force transmission member 21 exceeds the preload, the half-clutch manipulation force buffer spring 22 deforms, and the manipulation force transmission member 21 displaces in the releasing direction R, so that a force exceeding the preload is applied to the pressing portion 16 in accordance with the deformation of the half-clutch manipulation force buffer spring 22. Along with this, a slight gap is generated between the preload member 23 and the pressing portion 16.

As described above, the half-clutch manipulation force buffer spring 22 elastically deforms from the preload state while the manipulation force transmission member 21 is moving in the releasing direction R from the initial position in accordance with a manipulation force of the operating member 31. The half-clutch manipulation force buffer spring 22 deforms while absorbing an amount of displacement of the manipulation force transmission member 21, and in this state, biases the pressing portion 16 in the releasing direction R with an elastic force according to the deformation. The biasing force of the half-clutch manipulation force buffer spring 22 resists the pressing force that the clutch spring 18 applies to the first friction plates 13 and the second friction plates 14. As the biasing force of the half-clutch manipulation force buffer spring 22 increases, the pressing force to the first friction plates 13 and the second friction plates 14 therefore decreases. This consequently brings the centrifugal clutch 10 into the half-clutch state shown in the part (b) of FIG. 1. Thus, a connection capacity of the centrifugal clutch 10 decreases as compared to in the connected state.

Immediately after the gear stage is switched, a speed difference occurs between the first friction plates 13 and the second friction plates 14 due to the switching of the gear stage. In the centrifugal clutch 10, the first friction plates 13 and the second friction plates 14 in the half-clutch state rub against each other with a friction force in the half-clutch state, and in this state, the speed difference therebetween is gradually reduced. Unlike in the connected state, the first friction plates 13 and the second friction plates 14 are capable of rotating relative to each other, but they rub against each other with the friction force in the half-clutch state, and therefore the speed difference can be reduced gradually.

When, after the gear stage is switched and then the speed difference is reduced in the half-clutch state, the manipulation force transmission member 21 returns in the pressing direction P; a compression reaction force of the half-clutch manipulation force buffer spring 22, which resists the biasing force of the clutch spring 18, decreases in accordance with recovery from deformation of the half-clutch manipulation force buffer spring 22. While the half-clutch manipulation force buffer spring 22 is recovering from the deformed state to the preload state, its biasing force biasing the pressing portion 16 in the releasing direction R decreases. As a result, the pressing force to the first friction plates 13 and the second friction plates 14 increases so as to be restored. That is, the connection capacity of the centrifugal clutch 10 increases from the capacity in the half-clutch state. Consequently, the centrifugal clutch 10 returns from the half-clutch state shown in the part (b) of FIG. 1 to the connected state shown in the part (a) of FIG. 1. At this time, the speed difference has been reduced, and therefore the gear-shift shock is suppressed.

In the centrifugal clutch 10 of this embodiment, while the manipulation force transmission member 21 is moving in the releasing direction R from the initial position, the half-clutch manipulation force buffer spring 22 elastically deforms from the preload state. At this time, the half-clutch manipulation force buffer spring 22 elastically deforms while absorbing an amount of displacement of the manipulation force transmission member 21, and in this state, biases the pressing portion 16 in the releasing direction R with an elastic force according to the deformation, the elastic force being greater than the preload. In accordance with the elastic force according to the elastic deformation of the half-clutch manipulation force buffer spring 22, the pressing force to the first friction plates 13 and the second friction plates 14 decreases. This makes it possible to bring the centrifugal clutch 10 into the half-clutch state even though the amount of eventual movement of the manipulation force transmission member 21 fluctuates. In the half-clutch state, the speed difference is gradually reduced while the first friction plates 13 and the second friction plates 14 are rubbing against each other with the friction force. After the speed difference is reduced, the manipulation force transmission member 21 returns to the initial position, and therefore the gear-shift shock is suppressed.

In a state where the manipulation force transmission member 21 does not move in the releasing direction R from the initial position, including the connected state of the centrifugal clutch 10, the preload state of the half-clutch manipulation force buffer spring 22 is maintained. The elastic force of the half-clutch manipulation force buffer spring 22 in the preload state does not reduce the pressing force to the first friction plates 13 and the second friction plates 14. Thus, even if the half-clutch manipulation force buffer spring 22 has such a modulus of elasticity that the half-clutch manipulation force buffer spring 22 of the centrifugal clutch 10 is not squashed in the traveling state, the connection capacity of the centrifugal clutch 10 in the connected state does not decrease.

Accordingly, the centrifugal clutch 10 of this embodiment is capable of both suppressing a decrease in connection capacity of the centrifugal clutch 10 in the connected state and reducing the gear-shift shock at a time of switching the gear stage.

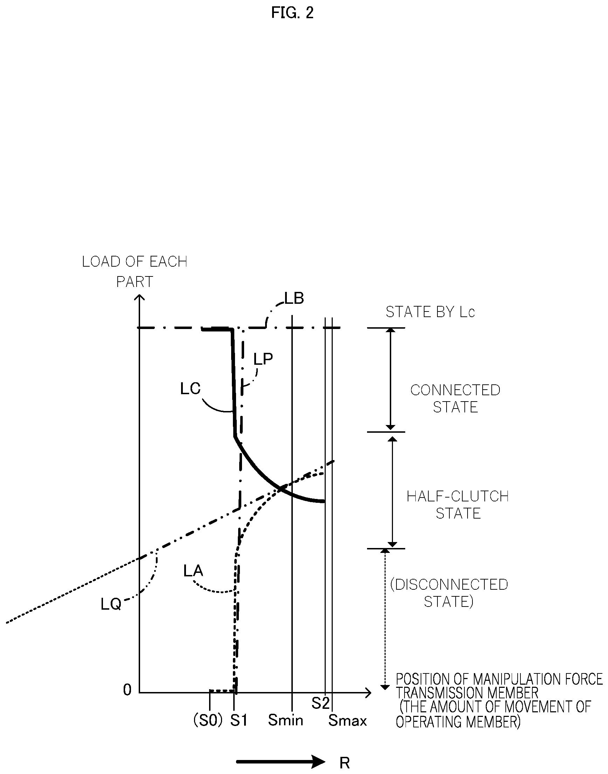

FIG. 2 is a graph showing an example of the relationship of a load of each part and the position of the manipulation force transmission member in the centrifugal clutch shown in FIG. 1.

The horizontal axis of the graph of FIG. 2 represents the position of the manipulation force transmission member 21. S1 indicates the initial position, which corresponds to the preload state of the half-clutch manipulation force buffer spring 22. First, in a case where the centrifugal clutch 10 is in the connected state; as the operating member 31 moves in the releasing direction R, the manipulation force transmission member 21 moves from S1, which is the initial position, to S2.

It should be noted that the horizontal axis represents the amount of movement of the operating member 31, too. Since a slack space is present between the operating member 31 and the manipulation force transmission member 21, the operating member 31 firstly moves over a distance from S0 to S1, which corresponds to the slack space, then comes into contact with the manipulation force transmission member 21 at S1, and then moves over a distance from S1 to S2 while pushing the manipulation force transmission member 21.

In FIG. 2, LA indicates a load of the half-clutch manipulation force buffer spring 22 pushing the pressing portion 16 in the releasing direction R. The load LA includes an elastic force involved in deformation of the half-clutch manipulation force buffer spring 22. First at the initial position S1, the load LA increases up to the preload. Then, as the manipulation force transmission member 21 moves from S1 to S2, the load LA slowly increases in accordance with the elastic deformation of the half-clutch manipulation force buffer spring 22.

In FIG. 2, LB indicates a load of the clutch spring 18 pushing the pressing portion 16 in the pressing direction P. In FIG. 2, LC indicates a load of the pressing portion 16 pushing the pressure member 15 in the pressing direction P. That is, LC is a pressing force to the first friction plates 13 and the second friction plates 14. FIG. 2 shows a state of the centrifugal clutch 10 in response to the pressing force LC.

The load LA of the half-clutch manipulation force buffer spring 22 resists the load LB of the clutch spring 18. Thus, the pressing force LC to the first friction plates 13 and the second friction plates 14 is a difference between LA and LB. That is, the pressing force LC decreases as the load LA increases in accordance with the elastic deformation of the half-clutch manipulation force buffer spring 22.

In more detail, at the initial position S1 of the manipulation force transmission member 21, the pressing force LC decreases in accordance with the preload. Then, the pressing force LC slowly decreases as the manipulation force transmission member 21 moves from S1 to S2. The pressing force LC falls within the range of the half-clutch state. The centrifugal clutch 10 is therefore brought into the half-clutch state.

In the example shown in FIG. 2, the manipulation force transmission member 21 moves up to S2. Actually, however, the manipulation force transmission member 21 can move up to any position in the range from Smin to Smax, depending on the degree of wear of the first and second friction plates 13, 14 and environmental conditions. Thus, the range from Smin to Smax is a half-clutch position range that is set in order to bring the centrifugal clutch 10 into the half-clutch state. The half-clutch manipulation force buffer spring 22 is a spring that produces the load LA for resisting the load LB of the clutch spring 18 to make the pressing force LC correspond to the half-clutch state when the position of the manipulation force transmission member 21 is within the half-clutch position range. Accordingly, the load LA of the half-clutch manipulation force buffer spring 22 while the position of the manipulation force transmission member 21 is within the half-clutch position range (from Smin to Smax) resists the load LB of the clutch spring 18, to make the pressing force LC a load corresponding to the half-clutch state.

As the manipulation force transmission member 21 moves from the initial position S1, the half-clutch manipulation force buffer spring 22 elastically deforms further from the preload state, so that the load LA slowly increases in accordance with the elastic deformation of the half-clutch manipulation force buffer spring 22. Accordingly, even if the position S2 of the manipulation force transmission member 21 in half-clutch changes in the range from Smin to Smax depending on the degree of wear and environmental conditions mentioned above, the pressing force LC can be maintained in the load range corresponding to the half-clutch state.

In FIG. 2, LP indicates a load in a comparative example. In this comparative example, the load LP is a load of the half-clutch manipulation force buffer spring pushing the pressing portion 16 in the releasing direction R in a case where the preload member were not present and the half-clutch manipulation force buffer spring of the centrifugal clutch 10 is squashed in the traveling state. Thus, the LP in FIG. 2 indicates a load obtained when a spring having such modulus-of-elasticity characteristics that the spring is squashed in traveling as in PTL 1 is adopted as the half-clutch manipulation force buffer spring. In this case, the load of the half-clutch manipulation force buffer spring pushing the pressing portion 16 in the releasing direction R abruptly increases at S1. Consequently, the pressing force to the first friction plates 13 and the second friction plates 14 abruptly decreases. That is, the centrifugal clutch 10 is brought into the disconnected state. In this case, the friction force between the first friction plates 13 and the second friction plates 14 is extremely low, and therefore a reduction in speed is suppressed. When the disconnected state then returns to the connected state, a shock occurs.

In FIG. 2, LQ indicates a load in another comparative example. The load is a load obtained in a case where the preload member were not present, and the half-clutch manipulation force buffer spring has such modulus-of-elasticity characteristics that squashing is not caused in traveling of the centrifugal clutch 10. In this case, at S2, a load equivalent to the load LA of this embodiment is produced. If, however, the half-clutch manipulation force buffer spring 22 has a high modulus of elasticity, the load LQ is high at the position S0, or even at a position to the left of S0 in FIG. 2, for example. The load LQ of the half-clutch manipulation force buffer spring resists the load LB of the clutch spring 18. In a case of this comparative example, the state of the centrifugal clutch 10 is the half-clutch state or a state close to the half-clutch state even though a manipulation force does not act on the operating member 31, and the operating member 31 and the manipulation force transmission member 21 are at a position corresponding to the connected state. That is, the connection capacity of the centrifugal clutch 10 in the connected state decreases.

In the centrifugal clutch 10 of this embodiment, the preload state of the half-clutch manipulation force buffer spring 22 is maintained. This makes it possible that a spring having such modulus-of-elasticity characteristics that the spring is not squashed in the traveling state is adopted as the half-clutch manipulation force buffer spring 22, and moreover can suppress a situation in which the connection capacity of the centrifugal clutch 10 in the connected state decreases. Accordingly, both suppression of a decrease in connection capacity of the centrifugal clutch 10 in the connected state and reduction of the gear-shift shock at a time of switching the gear stage can be achieved.

### [Second Embodiment]

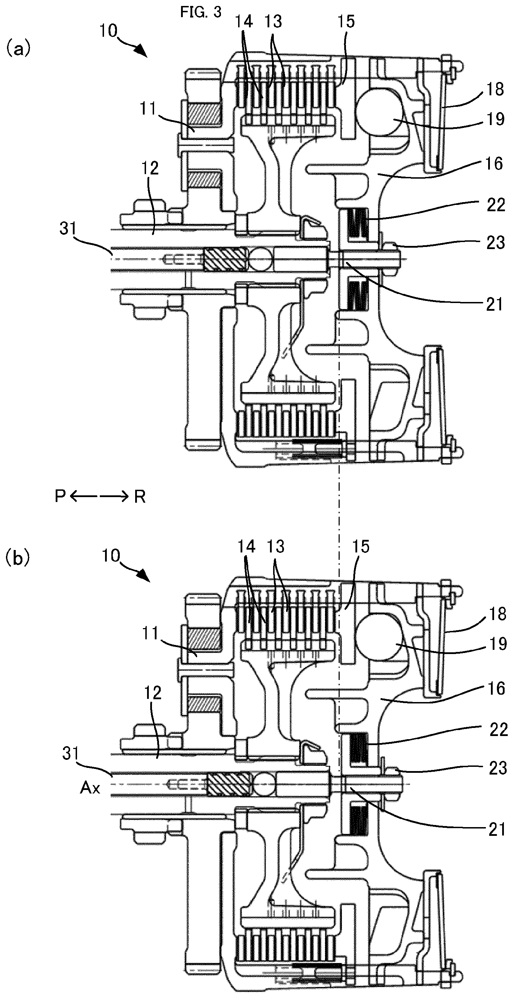

FIG. 3 is cross-sectional views showing a centrifugal clutch according to the second embodiment of the present teaching. The part (a) of FIG. 3 shows a connected state of the centrifugal clutch, and the part (b) of FIG. 3 shows a half-clutch state of the centrifugal clutch. The centrifugal clutch shown in FIG. 3 is an example of a structure of the centrifugal clutch shown in FIG. 1. Thus, a part whose function is common to this embodiment and the first embodiment will be denoted by the same reference sign, and a description thereof will be omitted.

The centrifugal clutch 10 shown in FIG. 3 is a multi-disc clutch. The centrifugal clutch 10 includes a clutch housing 11, an output section 12, plural first friction plates 13, plural second friction plates 14, a pressure member 15, a pressing portion 16, a clutch spring 18, a weight member 19, a manipulation force transmission member 21, a half-clutch manipulation force buffer spring 22, and a preload member 23.

The half-clutch manipulation force buffer spring 22 shown in FIG. 3 is a non-linear spring. The half-clutch manipulation force buffer spring 22 is more specifically a disc spring. The half-clutch manipulation force buffer spring 22 is even more specifically composed of plural unit springs arranged so as to overlap in the direction of the rotation axis line Ax. The preload member 23 is composed of a nut and a washer.

The centrifugal clutch 10 of this embodiment is different from that of the first embodiment in terms of shapes of details, etc. The centrifugal clutch 10, however, operates in the same manner as that of the first embodiment.

In the half-clutch state shown in the part (b) of FIG. 3, as compared to in the connected state shown in the part (a) of FIG. 3, the manipulation force transmission member 21 pushed by the operating member 31 displaces in the releasing direction R. Along with this, a slight gap is generated between the preload member 23 and the pressing portion 16.

The half-clutch manipulation force buffer spring 22 deforms while absorbing an amount of displacement of the manipulation force transmission member 21, and in this state, biases the pressing portion 16 in the releasing direction R with an elastic force according to the deformation. As the biasing force of the half-clutch manipulation force buffer spring 22 increases, a pressing force to the first friction plates 13 and the second friction plates 14 decreases. This consequently brings the centrifugal clutch 10 into the half-clutch state shown in the part (b) of FIG. 3.

Accordingly, the centrifugal clutch 10 of this embodiment is capable of both suppressing a decrease in connection capacity of the centrifugal clutch 10 in the connected state and reducing a gear-shift shock at a time of switching the gear stage.

### [Third Embodiment]

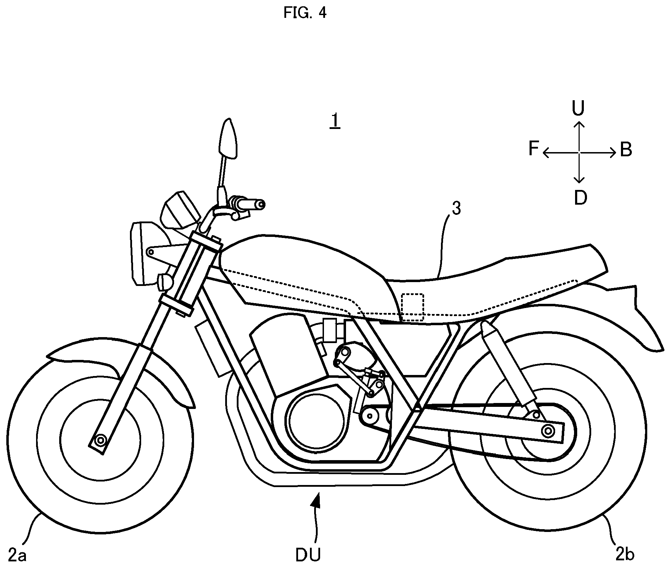

FIG. 4 is a side view showing a straddled vehicle as the third embodiment of the present teaching, the straddled vehicle including the centrifugal clutch shown in FIG. 3.

A straddled vehicle 1 shown in FIG. 4 includes two wheels 2a, 2b, a seat 3, and a drive unit DU.

The seat 3 is a saddle-type seat. A rider of the straddled vehicle 1 sits astride on the seat 3. The rear wheel 2b functions as a driving wheel. The drive unit DU supplies a driving force to the wheel 2b as the driving wheel. As the wheel 2b receiving the driving force rotates, the straddled vehicle 1 travels.

FIG. 5 is a cross-sectional view showing a power unit shown in FIG. 4.

The power unit shown in FIG. 4 includes the centrifugal clutch 10 shown in FIG. 3. The cross-sectional view of FIG. 5 is illustrated so as to be developed along the center of rotation, for the purpose of clear explanation of a cross-section of each part along the center of rotation. Thus, the positional relationship of the respective parts shown in FIG. 5 is different from the positional relationship in a side view, for example.

The drive unit DU shown in FIG. 5 includes the power source EG, the centrifugal clutch 10, the stepped transmission MT, and an electric clutch drive mechanism CD. That is, the straddled vehicle 1 shown in FIG. 4 includes the power source EG, the centrifugal clutch 10, the stepped transmission MT, and the electric clutch drive mechanism CD. The drive unit DU includes a control device ECU, too. That is, the straddled vehicle 1 shown in FIG. 4 includes the control device ECU, too.

The power source EG includes the output shaft CL. The power source EG is an engine. The output shaft CL is a crankshaft. The power source EG generates a driving force through combustion of a fuel, and outputs the driving force in the form of rotation of the output shaft CL. The power source EG supplies the driving force to the centrifugal clutch 10 via the output shaft CL. The centrifugal clutch 10 transmits to the stepped transmission MT the rotational driving force supplied from the power source EG. The stepped transmission MT has plural gear stages. The stepped transmission MT switches the gear stage, to switch the gear ratio of the input/output rotation speeds of the stepped transmission MT. The rotational driving force resulting from the rotation speed having been converted at the gear ratio of the stepped transmission MT is transmitted from the drive unit DU to the wheel 2b (see FIG. 4).

The electric clutch drive mechanism CD has an actuator AC. More specifically, the control device ECU controls the electric clutch drive mechanism CD. The control device ECU controls the electric clutch drive mechanism CD based on a rider's manipulation on a switch, or a traveling speed of the straddled vehicle 1, for example. In this manner, the control device ECU controls operations of the centrifugal clutch 10 and the stepped transmission MT involved in switching of the gear stage. The control device ECU also controls the power source EG, to control the rotational driving force to be outputted from the power source EG.

The electric clutch drive mechanism CD, through an operation of the actuator AC, displaces the manipulation force transmission member 21 of the centrifugal clutch 10 in the releasing direction R. In more detail, the electric clutch drive mechanism CD transmits an output of the actuator AC to the manipulation force transmission member 21 via the push rod, which is the operating member 31. By the operation of the actuator AC, the state of the centrifugal clutch 10 is switched between the connected state and the half-clutch state. The electric clutch drive mechanism CD controls the amount of operation of the actuator AC. That is, the electric clutch drive mechanism CD controls the amount of displacement of the manipulation force transmission member 21.

The electric clutch drive mechanism CD, through an operation of the actuator AC, switches the gear stage of the stepped transmission MT, too.

In the centrifugal clutch 10, as the manipulation force transmission member 21 moves due to driving of the electric clutch drive mechanism CD, a load increases in accordance with elastic deformation of the half-clutch manipulation force buffer spring 22. The load of the half-clutch manipulation force buffer spring 22, which is according to the elastic deformation, slowly increases in relation to the movement of the manipulation force transmission member 21. This makes it likely to achieve the half-clutch state. Accordingly, a fluctuation in the amount of reduction of the gear-shift shock is suppressed with a high accuracy. A fluctuation in the degree of reduction of the gear-shift shock in the centrifugal clutch 10 is suppressed.

The drive unit DU carries out a quick shift control. When switching of the gear stage in the stepped transmission MT is carried out, the control device ECU is controlled so as to temporarily change the rotational driving force of the power source EG. For example, before shift-up is carried out for switching the gear stage of the stepped transmission MT, the rotational driving force outputted from the power source EG is temporarily reduced. This facilitates switching of the gear stage in the stepped transmission MT.

Since the quick shift control is carried out, smooth and rapid switching of the gear stage can be carried out in the stepped transmission MT even if the centrifugal clutch 10 is not switched to the disconnected state.

As a result of switching of the gear stage and thus changing of the gear ratio, a shock can occur due to a difference in rotation speed. In this respect, however, the centrifugal clutch 10 of this embodiment is brought into the half-clutch state at a time of switching the gear stage, which allows a speed difference involved in the switching of the gear stage to be gradually reduced.

That is, at a time of switching the gear stage while the straddled vehicle 1 is traveling, the control device ECU carries out: a temporary change of the rotational driving force of the power source EG; switching of the gear stage in the stepped transmission MT; and a temporary transition to the half-clutch state of the centrifugal clutch 10.

### [First Variation]

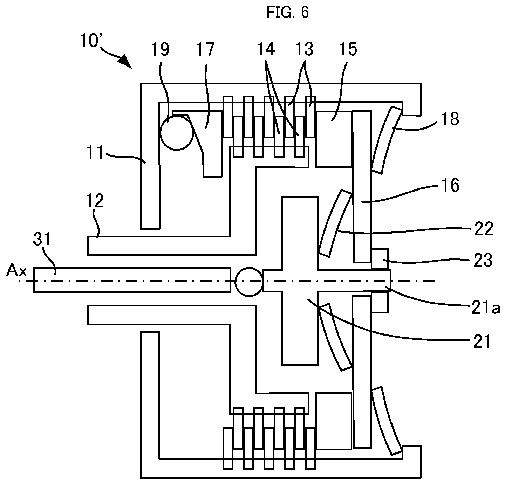

FIG. 6 is a cross-sectional view schematically showing a first variation of the centrifugal clutch shown in FIG. 1.

In a centrifugal clutch 10' of the first variation shown in FIG. 6, the pressing portion 16 and a cam portion 17 are separated. It should be noted that parts of the centrifugal clutch 10' shown in FIG. 6 have the same functions as those of the centrifugal clutch 10 shown in FIG. 1. Thus, a part in FIG. 6 having the same function as that in FIG. 1 will be denoted by the same reference sign, and a description thereof will be omitted.

The centrifugal clutch 10' of the first variation shown in FIG. 6 is also capable of both suppressing a decrease in connection capacity in the connected state and reducing the gear-shift shock at a time of switching the gear stage.

### [Second Variation]

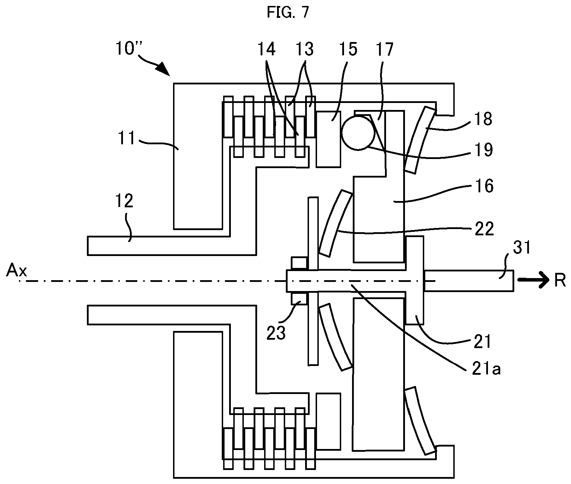

FIG. 7 is a cross-sectional view schematically showing a second variation of the centrifugal clutch shown in FIG. 1.

A centrifugal clutch 10" of the second variation shown in FIG. 7 is an outer-pull type clutch as it is called. In the centrifugal clutch 10" of the second variation, an operating member 31 is coupled to a manipulation force transmission member 21.

A penetrating portion 21a penetrates a pressing portion 16, and protrudes to the left in FIG. 7. A preload member 23 is screw-fixed to the penetrating portion 21a of the manipulation force transmission member 21.

At a time of switching the gear stage, the operating member 31 is pulled in the releasing direction R. This allows the manipulation force transmission member 21 to apply a half-clutch manipulation force to the pressing portion 16 via a half-clutch manipulation force buffer spring 22. The half-clutch manipulation force is a force that resists a biasing force of the clutch spring 18.

The other parts of the second variation have the same functions as those of the centrifugal clutch 10 shown in FIG. 1. Thus, a part in FIG. 7 having the same function as that in FIG. 1 will be denoted by the same reference sign, and a description thereof will be omitted.

The centrifugal clutch 10" of the second variation shown in FIG. 7 is also capable of both suppressing a decrease in connection capacity in the connected state and reducing the gear-shift shock at a time of switching the gear stage.

The outer-pull type structure illustrated in the second variation may be combined with a basic configuration of the first variation, for example.

### [Third Variation]

In the centrifugal clutch 10, 10' of the embodiment and variation examples described above, the change from connected state to half-clutch state by movement of the manipulation force transmission member 21 is implemented in either upshift or downshift of the stepped transmission MT. However, the types of shifts where the centrifugal clutch 10, 10' operates are not particularly limited, and may be implemented in both upshift and downshift, for example.

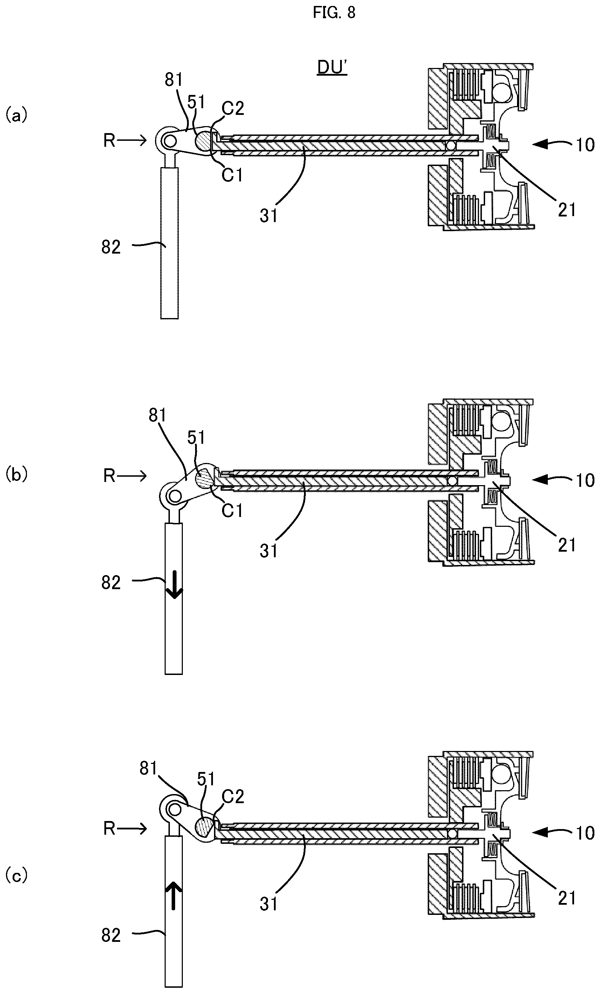

FIG. 8 is a cross-sectional view showing a part of a variation example of the power unit shown in FIG. 5.

In the power unit DU' of this variation example, the shape of the clutch lever 81 differs from the shape shown in FIG. 5. The clutch lever 81 is a portion that pushes the operating member 31 and the manipulation force transmission member 21 in the releasing direction R by rotating. More specifically, the cross-sectional shape of the clutch actuating cam 51 provided on the clutch lever 81 differs from the shape shown in FIG. 5. Additionally, in this variation example, corresponding to the shape of the clutch actuating cam 51, the shape of the portion of the operating member 31 that contacts the clutch actuating cam 51 differs from the shape shown in FIG. 5. Other parts in this variation example are common with those shown in FIG. 5. Therefore, common functional parts in this variation example and the elements shown in FIG. 5 are assigned the same reference numerals, and explanations are omitted.

The clutch lever 81 shown in FIG. 8 rotates around the clutch actuating cam 51 as a central axis in association with the movement of the clutch link rod 82. The clutch lever 81 rotates in opposite directions during upshift and downshift. Part (a) of FIG. 8 shows the clutch lever 81 in a neutral region state, which is neither during upshift nor downshift.

The clutch actuating cam 51 has a first cam C1 that pushes the operating member 31 when rotated clockwise from the neutral region in the figure, and a second cam C2 that pushes the operating member 31 when rotated counterclockwise from the neutral region.

Part (b) of FIG. 8 shows the clutch lever 81 during upshift while traveling. Part (c) of FIG. 8 shows the clutch lever 81 during downshift while traveling.

During upshift shown in part (b) of FIG. 8, the clutch link rod 82 connected to the clutch lever 81 moves in a direction (downward in the figure) where the end opposite to the end connected to the clutch lever 81 is located. The clutch lever 81 rotates counterclockwise from the neutral region. The first cam C1 of the clutch actuating cam 51 pushes the operating member 31 in the releasing direction R. As a result, the centrifugal clutch 10 changes to the half-clutch state.

During downshift shown in part (c) of FIG. 8, the clutch link rod 82 connected to the clutch lever 81 moves in a direction (upward in the figure) where the end connected to the clutch lever 81 is located. The clutch lever 81 rotates clockwise from the neutral region. The second cam C2 of the clutch actuating cam 51 pushes the operating member 31 in the releasing direction R. The centrifugal clutch 10 changes to the half-clutch state.

According to this variation example, the change from connected state to half-clutch state by movement of the manipulation force transmission member 21 can be realized in both upshift and downshift of the stepped transmission MT.

### Reference Signs List

- 1: : straddled vehicle
- 2a: : wheel
- 2b: : wheel
- 10: : centrifugal clutch
- 11: : clutch housing
- 12: : output section
- 13: : first friction plate
- 14: : second friction plate
- 15: : pressure member
- 16: : pressing portion
- 17: : cam portion
- 18: : clutch spring
- 19: : weight member
- 21: : manipulation force transmission member
- 21a: : penetrating portion
- 22: : half-clutch manipulation force buffer spring
- 23: : preload member
- AC: : actuator
- Ax: : rotation axis line
- CD: : electric clutch drive mechanism
- EG: : power source
- MT: : stepped transmission
- P: : pressing direction
- R: : releasing direction

## Claims

1. A centrifugal clutch (10) for transmitting a rotational driving force of a power source (EG) to a stepped transmission (MT), the centrifugal clutch (10) comprising:
a clutch housing (11) configured to be rotated about a rotation axis line (Ax) by receiving a rotational driving force of the power source (EG);
a first friction plate (13) configured to rotate integrally with the clutch housing (11);
a second friction plate (14) configured to rotate integrally with an output section (12) of the centrifugal clutch (10);
a clutch spring (18) for producing, as a reaction force of elastic deformation, a pressing force in a pressing direction (P) parallel to the rotation axis line (Ax), the pressing force pressing one friction plate out of the first friction plate (13) and the second friction plate (14) to the other friction plate out of the first friction plate (13) and the second friction plate (14), to bring the first friction plate (13) and the second friction plate (14) into an engaged state;
a pressing portion (16) disposed between the clutch spring (18) and the first and second friction plates (13, 14), the pressing portion (16) being configured to receive the pressing force from the clutch spring (18);
a weight member (19) arranged so as to rotate together with rotation of the clutch housing (11), the weight member (19) being configured to displace outward in a rotational radial direction due to a centrifugal force of rotation;
a cam portion (17) disposed in contact with the weight member (19), the cam portion (17) being disposed between the clutch housing (11) and the pressing portion (16) in an axial direction of the rotation axis line (Ax), the cam portion (17) being configured to press the first friction plate (13) and the second friction plate (14) with the pressing force received by the pressing portion (16) as the weight member (19) displaces outward;
a manipulation force transmission member (21) configured to receive a manipulation force for changing the state of the first friction plate (13) and the second friction plate (14) from the engaged state to a half-clutch state, and displace in a releasing direction (R) reverse to the pressing direction (P), to apply a half-clutch manipulation force to the pressing portion (16), the half-clutch manipulation force resisting the pressing force from the clutch spring (18);
a half-clutch manipulation force buffer spring (22) interposed between the manipulation force transmission member (21) and the pressing portion (16), the half-clutch manipulation force buffer spring (22) being configured to be pushed by the manipulation force transmission member (21) moving in the releasing direction (R), and elastically deform, to bias the pressing portion (16) in the releasing direction (R); and **characterised in that** the centrifugal clutch further comprises
a preload member (23) that is fixed to the manipulation force transmission member (21) so as to create a state in which the half-clutch manipulation force buffer spring (22) and the pressing portion (16) are pinched between the preload member (23) and the manipulation force transmission member (21) while a preload is applied to the half-clutch manipulation force buffer spring (22).

2. The centrifugal clutch (10) according to claim 1, wherein
the half-clutch manipulation force buffer spring (22) is a non-linear spring.

3. The centrifugal clutch (10) according to claim 1 or 2, wherein
the preload member (23) is fixed to the manipulation force transmission member (21), at such a position that the amount of deformation of the half-clutch manipulation force buffer spring (22) having a preload applied thereto is maintained irrespective of displacement of the weight member (19).

4. The centrifugal clutch (10) according to any one of claims 1 to 3, wherein
one of the manipulation force transmission member (21) and the preload member (23) has a penetrating portion (21a), and the other of the manipulation force transmission member (21) and the preload member (23) is fixed to the penetrating portion (21a), the penetrating portion (21a) penetrating the half-clutch manipulation force buffer spring (22) and the pressing portion (16) and protruding from the half-clutch manipulation force buffer spring (22) and the pressing portion (16).

5. A straddled vehicle (1) comprising:
the centrifugal clutch (10) according to any one of claims 1 to 4; and
a wheel (2b) configured to receive a rotational driving force transmitted via the centrifugal clutch (10).

6. The straddled vehicle (1) according to claim 5, further comprising
an electric clutch drive mechanism (CD) having an actuator (AC), the electric clutch drive mechanism (CD) being configured to, through an operation of the actuator (AC), displace the manipulation force transmission member (21) in the releasing direction (R).

## Patentansprüche

1. Eine Fliehkraftkupplung (10) zum Übertragen einer Drehantriebskraft einer Leistungsquelle (EG) an ein Stufengetriebe (MT), wobei die Fliehkraftkupplung (10) folgende Merkmale aufweist:
ein Kupplungsgehäuse (11), das dazu konfiguriert ist, durch Aufnehmen einer Drehantriebskraft der Leistungsquelle (EG) um eine Drehachsenlinie (Ax) gedreht zu werden;
eine erste Reibungsplatte (13), die dazu konfiguriert ist, einstückig mit dem Kupplungsgehäuse (11) zu drehen;
eine zweite Reibungsplatte (14), die dazu konfiguriert ist, einstückig mit einem Ausgabesegment (12) der Fliehkraftkupplung (10) zu drehen;
eine Kupplungsfeder (18) zum Erzeugen, als Rückstellkraft einer elastischen Verformung, einer Druckkraft in einer Druckrichtung (P) parallel zu der Drehachsenlinie (Ax), wobei die Druckkraft eine Reibungsplatte aus der ersten Reibungsplatte (13) und der zweiten Reibungsplatte (14) zu der anderen Reibungsplatte aus der ersten Reibungsplatte (13) und der zweiten Reibungsplatte (14) drückt, um die erste Reibungsplatte (13) und die zweite Reibungsplatte (14) in einen Eingriffszustand zu bringen;
einen Druckabschnitt (16), der sich zwischen der Kupplungsfeder (18) und der ersten und der zweiten Reibungsplatte (13, 14) befindet, wobei der Druckabschnitt (16) dazu konfiguriert ist, die Druckkraft von der Kupplungsfeder (18) aufzunehmen;
ein Gewichtsbauglied (19), das dahingehend angeordnet ist, sich zusammen mit der Drehung des Kupplungsgehäuses (11) zu drehen, wobei das Gewichtsbauglied (19) dazu konfiguriert ist, sich aufgrund einer Fliehkraft der Drehung in einer radialen Drehrichtung nach außen zu verschieben;
einen Nockenabschnitt (17), der sich in Kontakt mit dem Gewichtsbauglied (19) befindet, wobei sich der Nockenabschnitt (17) in einer Axialrichtung der Drehachsenlinie (Ax) zwischen dem Kupplungsgehäuse (11) und dem Druckabschnitt (16) befindet, wobei der Nockenabschnitt (17) dazu konfiguriert ist, die erste Reibungsplatte (13) und die zweite Reibungsplatte (14) mit der von dem Druckabschnitt (16) aufgenommenen Druckkraft zu drücken, wenn sich das Gewichtsbauglied (19) nach außen verschiebt;
ein Manipulationskraftübertragungsbauglied (21), das dazu konfiguriert ist, eine Manipulationskraft zum Ändern des Zustands der ersten Reibungsplatte (13) und der zweiten Reibungsplatte (14) von dem Eingriffszustand in einen Halbkupplungszustand aufzunehmen und sich in einer der Druckrichtung (P) entgegengesetzten Ausrückrichtung (R) zu verschieben, um eine Halbkupplungsmanipulationskraft auf den Druckabschnitt (16) auszuüben, wobei die Halbkupplungsmanipulationskraft der Druckkraft von der Kupplungsfeder (18) widersteht;
eine Halbkupplungsmanipulationskraftpufferfeder (22), die zwischen dem Manipulationskraftübertragungsbauglied (21) und dem Druckabschnitt (16) angeordnet ist, wobei die Halbkupplungsmanipulationskraftpufferfeder (22) dazu konfiguriert ist, durch das Manipulationskraftübertragungsbauglied (21), das sich in der Ausrückrichtung (R) bewegt, geschoben zu werden und sich auf elastische Weise zu verformen, um den Druckabschnitt (16) in der Ausrückrichtung (R) vorzuspannen; und **dadurch gekennzeichnet, dass** die Fliehkraftkupplung ferner folgendes Merkmal aufweist:
ein Vorbelastungsbauglied (23), das an dem Manipulationskraftübertragungsbauglied (21) fixiert ist, um einen Zustand zu erzeugen, in dem die Halbkupplungsmanipulationskraftpufferfeder (22) und der Druckabschnitt (16) zwischen dem Vorbelastungsbauglied (23) und dem Manipulationskraftübertragungsbauglied (21) eingeklemmt sind, während auf die Halbkupplungsmanipulationskraftpufferfeder (22) eine Vorbelastung angewendet wird.

2. Die Fliehkraftkupplung (10) gemäß Anspruch 1, wobei
die Halbkupplungsmanipulationskraftpufferfeder (22) eine nicht lineare Feder ist.

3. Die Fliehkraftkupplung (10) gemäß Anspruch 1 oder 2, wobei
das Vorbelastungsbauglied (23) an einer solchen Position an dem Manipulationskraftübertragungsbauglied (21) fixiert ist, dass der Betrag der Verformung der Halbkupplungsmanipulationskraftpufferfeder (22), auf die eine Vorbelastung angewendet wird, unabhängig von der Verschiebung des Gewichtsbauglied (19) beibehalten wird.

4. Die Fliehkraftkupplung (10) gemäß einem der Ansprüche 1 bis 3, wobei
eines aus dem Manipulationskraftübertragungsbauglied (21) und dem Vorbelastungsbauglied (23) einen Durchdringungsabschnitt (21a) aufweist und das andere aus dem Manipulationskraftübertragungsbauglied (21) und dem Vorbelastungsbauglied (23) an dem Durchdringungsabschnitt (21a) fixiert ist, wobei der Durchdringungsabschnitt (21a) die Halbkupplungsmanipulationskraftpufferfeder (22) und den Druckabschnitt (16) durchdringt und von der Halbkupplungsmanipulationskraftpufferfeder (22) und dem Druckabschnitt (16) vorsteht.

5. Ein Spreizsitzfahrzeug (1), das folgende Merkmale aufweist:
die Fliehkraftkupplung (10) gemäß einem der Ansprüche 1 bis 4, und
ein Rad (2b), das dazu konfiguriert ist, eine Drehantriebskraft aufzunehmen, die über die Fliehkraftkupplung (10) übertragen wird.

6. Das Spreizsitzfahrzeug (1) gemäß Anspruch 5, das ferner folgendes Merkmal aufweist:
einen elektrischen Kupplungsantriebsmechanismus (CD) mit einem Aktuator (AC), wobei der elektrische Kupplungsantriebsmechanismus (CD) dazu konfiguriert ist, durch einen Betrieb des Aktuators (AC) das Manipulationskraftübertragungsbauglied (21) in der Ausrückrichtung (R) zu verschieben.

## Revendications

1. Embrayage centrifuge (10) destiné à transmettre une force d'entraînement en rotation d'une source de puissance (EG) à une boîte de vitesses à rapports étagés (MT), l'embrayage centrifuge (10) comprenant :
un carter d'embrayage (11) configuré pour tourner autour d'une ligne d'un axe de rotation (Ax) en recevant une force d'entraînement en rotation provenant de la source d'énergie (EG) ;
une première plaque de friction (13) configurée pour tourner solidairement avec le carter d'embrayage (11) ;
une deuxième plaque de friction (14) configurée pour tourner solidairement avec une section de sortie (12) de l'embrayage centrifuge (10) ;
un ressort d'embrayage (18) destiné à générer, sous forme de force de réaction due à une déformation élastique, une force de pression dans une direction de pression (P) parallèle à la ligne de l'axe de rotation (Ax), la force de pression pressant une plaque de friction parmi la première plaque de friction (13) et la deuxième plaque de friction (14) vers l'autre plaque de friction parmi la première plaque de friction (13) et la deuxième plaque de friction (14), afin d'amener la première plaque de friction (13) et la deuxième plaque de friction (14) en état de prise ;
une partie de pression (16) disposée entre le ressort d'embrayage (18) et les première et deuxième plaques de friction (13, 14), la partie de pression (16) étant configurée pour recevoir la force de pression exercée par le ressort d'embrayage (18) ;
un élément de masse (19) agencé de manière à tourner avec la rotation du carter d'embrayage (11), l'élément de masse (19) étant configuré pour se déplacer vers l'extérieur dans une direction radiale de rotation en raison d'une force centrifuge de rotation ;
une partie de came (17) disposée en contact avec l'élément de masse (19), la partie de came (17) étant disposée entre le carter d'embrayage (11) et la partie de pression (16) dans une direction axiale de la ligne de l'axe de rotation (Ax), la partie de came (17) étant configurée pour presser la première plaque de friction (13) et la deuxième plaque de friction (14) avec la force de pression reçue par la partie de pression (16) lorsque l'élément de masse (19) se déplace vers l'extérieur ;
un élément de transmission de force de manipulation (21) configuré pour recevoir une force de manipulation destinée à faire passer la première plaque de friction (13) et la deuxième plaque de friction (14) de l'état de prise à un état de demi-embrayage, et pour se déplacer dans une direction de débrayage (R) opposée à la direction de pression (P), afin d'appliquer une force de manipulation de demi-embrayage à la partie de pression (16), la force de manipulation de demi-embrayage s'opposant à la force de pression exercée par le ressort d'embrayage (18) ;
un ressort tampon (22) de la force de manipulation de demi-embrayage, interposé entre l'élément de transmission de la force de manipulation (21) et la partie de pression (16), le ressort tampon (22) de la force de manipulation de demi-embrayage étant configuré pour être poussé par l'élément de transmission de la force de manipulation (21) se déplaçant dans le sens de débrayage (R), et pour se déformer élastiquement afin de solliciter la partie de pression (16) dans le sens de débrayage (R) ; et **caractérisé en ce que** l'embrayage centrifuge comprend en outre
un élément de précontrainte (23) qui est fixé à l'élément de transmission de la force de manipulation (21) de sorte à créer un état dans lequel le ressort tampon (22) de la force de manipulation de demi-embrayage et la partie de pression (16) sont serrés entre l'élément de précontrainte (23) et l'élément de transmission de la force de manipulation (21), tandis qu'une précontrainte est appliquée au ressort tampon (22) de la force de manipulation de demi-embrayage.

2. Embrayage centrifuge (10) selon la revendication 1, dans lequel
le ressort tampon (22) de la force de manipulation de demi-embrayage est un ressort non linéaire.

3. Embrayage centrifuge (10) selon la revendication 1 ou 2, dans lequel
l'élément de précontrainte (23) est fixé à l'élément de transmission de la force de manipulation (21), dans une position telle que l'amplitude de déformation du ressort tampon (22) de la force de manipulation de demi-embrayage, sur lequel une précontrainte est appliquée, soit maintenue quel que soit le déplacement de l'élément de masse (19).

4. Embrayage centrifuge (10) selon l'une quelconque des revendications 1 à 3, dans lequel
l'un de l'élément de transmission de la force de manipulation (21) et de l'élément de précontrainte (23) présente une partie pénétrante (21a), et l'autre de l'élément de transmission de la force de manipulation (21) et de l'élément de précontrainte (23) est fixé à la partie pénétrante (21a), la partie pénétrante (21a) pénétrant dans le ressort tampon (22) de la force de manipulation de demi-embrayage et la partie de pression (16), et faisant saillie hors du ressort tampon de la force (22) de manipulation de demi-embrayage et de la partie de pression (16).

5. Véhicule à selle (1) comprenant :
l'embrayage centrifuge (10) selon l'une quelconque des revendications 1 à 4 ; et
une roue (2b) configurée pour recevoir une force d'entraînement en rotation transmise à travers l'embrayage centrifuge (10).

6. Véhicule à selle (1) selon la revendication 5, comprenant en outre
un mécanisme d'entraînement d'embrayage électrique (CD) présentant un actionneur (AC), le mécanisme d'entraînement d'embrayage électrique (CD) étant configuré pour, grâce une action de l'actionneur (AC), déplacer l'élément de transmission de la force de manipulation (21) dans la direction de débrayage (R).
